# EUROPEAN PATENT APPLICATION

(11) **EP 4 345 984 A1**
(43) Date of publication of application: **03.04.2024**
(21) Application number: 22857475.2
(22) Date of filing: 12.07.2022
(51) Int. Cl.: H01M 10/613, H01M 10/6556, H01M 10/6568, H01M 50/209

(54) **BATTERY AND ELECTRICAL APPARATUS**

(30) Priority: 18.08.2021 CN 202110951260
(71) Applicant: Contemporary Amperex Technology Co., Limited, Ningde, Fujian 352100 (CN)
(72) Inventor: XIAO, Haihe, Ningde, Fujian 352100 (CN); ZHANG, Xiaowen, Ningde, Fujian 352100 (CN); ZHOU, Xigen, Ningde, Fujian 352100 (CN); PENG, Shuangjuan, Ningde, Fujian 352100 (CN)
(74) Representative: Kraus & Lederer PartGmbB
(86) International application number: PCT/CN2022/105104
(87) International publication number: WO 2023/020162

(57) **Abstract**

This application relates to the field of battery technologies, and in particular, to a battery and an electric apparatus. The battery includes a firefighting pipe and a plurality of battery cells provided with a pressure relief mechanism, where the pressure relief mechanism is configured to be actuated and release internal pressure in a first direction when the internal pressure or temperature of the battery cell reaches a threshold; the firefighting pipe is arranged on a side of the plurality of battery cells that is provided with the pressure relief mechanism, and is disposed in a staggered manner with the pressure relief mechanism in the first direction; and the firefighting pipe is provided with a drainage opening, where the drainage opening is configured to discharge a firefighting medium toward the pressure relief mechanism when the pressure relief mechanism is actuated, so as to cool the battery cell. The battery provided in this application allows the firefighting medium to more quickly cool a battery cell whose internal pressure or temperature exceeds a threshold, thereby improving use safety of the battery.

## Description

### CROSS-REFERENCE TO RELATED APPLICATIONS

This application claims priority to Chinese Patent Application No. 202110951260.7, filed on August 18, 2021 and entitled "BATTERY AND ELECTRIC APPARATUS", which is incorporated herein by reference in its entirety.

### TECHNICAL FIELD

This application relates to the battery field, and in particular, to a battery and an electric apparatus.

### BACKGROUND

With economic development, battery technologies have been widely applied in various fields, especially in the field of transportation means, such as the field of electric vehicles. The safety of batteries is a top priority of the electric vehicles and energy storage systems. Thermal runaway is one of the main factors affecting the safety of batteries, and once the thermal runaway of battery cells diffuses to the entire battery system, a major safety accident will occur. Therefore, how the problem of thermal runaway and diffusion of battery cells is resolved to improve the safety of batteries is of great research significance and value.

### SUMMARY

This application provides a battery and an electric apparatus, to improve the safety of the battery.

Embodiments in a first aspect of this application provide a battery. The battery includes: a plurality of battery cells, where the plurality of battery cells are each provided with a pressure relief mechanism, and the pressure relief mechanism is configured to be actuated to release internal pressure in a first direction when internal pressure or temperature of the battery cell reaches a threshold; and a firefighting pipe, configured to accommodate a firefighting medium, where the firefighting pipe is arranged along the first direction on a side of the plurality of battery cells that is provided with the pressure relief mechanism, and is disposed in a staggered manner with the pressure relief mechanism, the firefighting pipe is provided with a drainage opening, and the drainage opening is configured to discharge the firefighting medium toward the pressure relief mechanism when the pressure relief mechanism is actuated, so as to cool the battery cell.

In the foregoing solution, the drainage opening can be staggered with the pressure relief mechanism in the first direction, and when the pressure relief mechanism is actuated, the drainage opening on the firefighting pipe can avoid emissions sprayed when the pressure relief mechanism releases the internal pressure in the first direction, so that external pressure of the drainage opening is small, allowing the firefighting medium to be smoothly discharged from the drainage opening of the firefighting pipe and cool the battery cell.

In some embodiments, the firefighting pipe includes a first pipe extending in a second direction, where the plurality of battery cells are arranged side by side in the second direction, the second direction being perpendicular to the first direction, and a surface of the first pipe facing the pressure relief mechanism is provided with a first drainage opening.

In the foregoing solution, the firefighting medium can be fed for the plurality of battery cells by the first pipe, and when the pressure relief mechanism on the battery cell is actuated caused by the internal pressure or temperature reaching the threshold, the drainage opening provided on the first pipe and facing the pressure relief mechanism can discharge the firefighting medium, and the firefighting medium enters the battery cell via the pressure relief mechanism to cool the battery cell.

In some embodiments, the firefighting pipe further includes a second pipe extending in a third direction, where the second pipe and the first pipe are in communication with each other, and a surface of the second pipe facing the pressure relief mechanism is provided with a second drainage opening, the third direction being perpendicular to the first direction and the second direction.

In the foregoing solution, the pressure relief mechanism is provided with the firefighting pipe on both a side in the second direction and a side in the third direction, and surfaces of the firefighting pipe facing the pressure relief mechanism are all provided with a drainage opening. When the pressure relief mechanism is actuated, the firefighting medium can be discharged to the pressure relief mechanism through the drainage openings on both sides, so that the battery cell is cooled more quickly.

In some embodiments, the firefighting pipe includes two first pipes and at least two second pipes, where two adjacent second pipes among the at least two second pipes respectively intersect the two first pipes to form an enclosed zone, and at least one pressure relief mechanism is provided in the enclosed zone.

In the foregoing solution, the first pipe and the second pipe enclose the pressure relief mechanism, and the surfaces of the first pipe and the second pipe facing the pressure relief mechanism are all provided with the drainage opening, so that the firefighting medium can be discharged from the drainage openings in four directions at the same time, allowing the firefighting medium to be discharged more quickly and better cool the battery cell.

In some embodiments, the firefighting pipe includes a third pipe, where the third pipe is bent and extends in the second direction, and the plurality of battery cells are arranged side by side in the second direction, the second direction being perpendicular to the first direction; and the third pipe includes a plurality of bending portions having an opening facing the third direction, and at least one pressure relief mechanism is provided in the bending portions, the third direction being perpendicular to the first direction and the second direction.

In the foregoing solution, the firefighting pipe is arranged on periphery of the pressure relief mechanism, which allows for a greater area of the firefighting pipe for arranging the drainage openings. When size of the plurality of battery cells in the second direction changes due to battery cell swelling, the bending portion of the firefighting pipe can change the opening angle of an opening as the size changes, so that the length of the firefighting pipe in the second direction matches length of the plurality of battery cells in the second direction.

In some embodiments, the openings on the plurality of bending portions all face a same side.

In the foregoing solution, a joint of the plurality of the bending portions is a position at which the flow direction of the firefighting medium suddenly changes, and turbulent flows are easily generated at such position to increase a flowing speed, so that the internal pressure of the bending portion is increased, and the firefighting medium is easier to flow out, thereby improving the cooling efficiency.

In some embodiments, the openings of two adjacent bending portions among the plurality of bending portions face opposite sides.

With the foregoing solution, the bending portions on the firefighting pipe are stressed more evenly in the case of adapting to a length change of the plurality of battery cells in the second direction, which improves deformation capability of the firefighting pipe, allowing the plurality of the drainage openings to maintain positions with respect to the plurality of pressure relief mechanisms.

In some embodiments, the battery further includes a sealing member for sealing the drainage opening, where the sealing member is configured to be damaged when the pressure relief mechanism is actuated, so that the firefighting medium flows out from the drainage opening.

With the foregoing solution, the firefighting pipe can quickly react when the pressure relief mechanism is actuated, and the sealing member can be quickly destroyed, so that the firefighting medium can flow out from the firefighting pipe and cool the battery cell, thereby improving the overall safety and reliability of the battery.

In some embodiments, the sealing member is made from a thermosensitive material.

With the foregoing solution, when the pressure relief mechanism is actuated, the high temperature resulting from the pressure relief mechanism releasing the internal pressure destroys the sealing member, so that the firefighting medium can be discharged from the drainage opening. This improves reaction sensitivity of the sealing member to actuation of the pressure relief mechanism.

In some embodiments, the battery cell further includes a side wall, where an outer surface of the side wall is provided with a groove, and the pressure relief mechanism is located in the groove.

In the foregoing solution, when the pressure relief mechanism is actuated and releases the internal pressure, the firefighting medium that is difficult to enter the pressure relief mechanism can temporarily gather in the groove and finally flow into the pressure relief mechanism under the action of gravity to cool the battery cell.

Embodiments in a second aspect of this application further provide an electric apparatus, including the battery according to any one of the foregoing embodiments, where the battery is configured to provide electric energy.

The foregoing description is merely an overview of the technical solutions in the embodiments of this application. For a better understanding of the technical means in this application such that they can be implemented according to the content of the specification, and to make the above and other objects, features, and advantages in the embodiments of this application more obvious and easy to understand, the following describes specific embodiments of this application.

### BRIEF DESCRIPTION OF DRAWINGS

Other features, purposes and advantages of this application will become more apparent by reading the following detailed description of the non-limitative embodiments with reference to the accompanying drawings, where the same or similar reference signs indicate the same or similar features.
FIG. 1 is a schematic structural diagram of a vehicle according to an embodiment of this application;
FIG. 2 is a schematic exploded view of a battery according to some embodiments of this application;
FIG. 3 is a schematic diagram of assembling a firefighting pipe and a battery cell according to some embodiments of this application;
FIG. 4 is a schematic exploded view of FIG. 3;
FIG. 5 is a top view of FIG. 3;
FIG. 6 is a locally enlarged view of position K in FIG. 3;
FIG. 7 is a schematic diagram of assembling a firefighting pipe and a battery cell according to some other embodiments of this application;
FIG. 8 is a locally enlarged view of a position G in FIG. 7;
FIG. 9 is a schematic diagram of assembling a firefighting pipe and a battery cell according to still some other embodiments of this application;
FIG. 10 is a locally enlarged view of position M in FIG. 9;
FIG. 11 is a schematic diagram of assembling a firefighting pipe and a battery cell according to still some other embodiments of this application;
FIG. 12 is a schematic diagram of assembling a firefighting pipe and a battery cell according to some other embodiments of this application;
FIG. 13 is a locally enlarged view of position N in FIG. 12; and
FIG. 14 is a schematic diagram of arrangement of a plurality of battery cells according to some embodiments of this application.

Reference signs are described as follows:
1. vehicle;
2. battery;
21. firefighting pipe; 211. drainage opening; 212. first pipe; 212a. first drainage opening; 213. second pipe; 213 a. second drainage opening; 214. third pipe; 214a. bending portion;
22. sealing member;
3. controller;
4. motor;
5. box; 51. first box portion; 52. second box portion; 53. accommodating space;
6. battery cell; 61. pressure relief mechanism; 62. side wall; 621. groove;
X. first direction; Y second direction; and Z. third direction.

### DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. Apparently, the described embodiments are some but not all of the embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by those skilled in the art to which this application belongs. The terms used in the specification of this application are merely intended to describe the specific embodiments but not intended to constitute any limitation on this application. The terms "include", "comprise", and any variations thereof in the specification and claims of this application and the foregoing description of the drawings are intended to cover non-exclusive inclusions. In the specification, claims, or accompanying drawings of this application, the terms "first", "second", and the like are intended to distinguish between different objects but do not indicate a particular order or a subordinate relationship.

An "embodiment" mentioned in this application means that specified features, structures, or characteristics described with reference to this embodiment may be included in at least one embodiment of this application. The word "embodiment" in various positions in the specification does not necessarily refer to a same embodiment, or an independent or alternative embodiment that is exclusive of other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection, and may refer to a direct connection, an indirect connection via an intermediate medium, or an internal communication between two elements. Persons of ordinary skills in the art can understand specific meanings of these terms in this application as appropriate to specific situations.

The term "and/or" in this application describes only an association relationship for describing associated objects and represents that three relationships may exist. For example, A and/or B may represent the following three cases: A alone, both A and B, and B alone. In addition, the character "/" in this application generally indicates an "or" relationship between the associated objects.

In the embodiments of this application, the same reference signs denote the same components. For brevity, in different embodiments, detailed descriptions of the same components are not repeated. It should be understood that, as shown in the accompanying drawings, sizes such as thickness, length, and width of various components and sizes such as thickness, length, and width of integrated devices in the embodiments of this application are merely for illustrative purposes and should not constitute any limitations on this application.

In this application, "a plurality of" means more than two (inclusive).

The battery cell in the application may include a lithium-ion secondary battery cell, a lithium-ion primary battery cell, a lithium-sulfur battery cell, a sodium-lithium-ion battery cell, a sodium-ion battery cell, a magnesium-ion battery cell, or the like. This is not limited in the embodiments of this application. The battery cell may be cylindrical, flat, cuboid, or of other shapes, which is not limited in the embodiments of this application either. Battery cells are typically divided into three types by packaging method: cylindrical cell, prismatic cell, and pouch cell. This is not limited in the embodiments of this application either.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells, and the box can prevent liquids or other foreign matter from affecting charging or discharging of the battery cell.

The battery cell includes an electrode assembly and an electrolyte. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active substance layer. The positive electrode active substance layer is applied on a surface of the positive electrode current collector. The positive electrode current collector includes a positive electrode current collecting part and a positive electrode protrusion protruding from the positive electrode current collecting part. The positive electrode current collecting part is coated with the positive electrode active substance layer, at least part of the positive electrode protrusion is uncoated with the positive electrode active substance layer, and the positive electrode protrusion is used as a positive tab. With a lithium-ion battery as an example, its positive electrode current collector may be made of aluminum, and its positive electrode active substance layer includes a positive electrode active substance which may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. The negative electrode current collector includes a negative electrode current collecting part and a negative electrode protrusion protruding from the negative electrode current collecting part. The negative electrode current collecting part is coated with the negative electrode active substance layer, at least part of the negative electrode protrusion is uncoated with the negative electrode active substance layer, and the negative electrode protrusion is used as a negative tab. The negative electrode current collector may be made of copper, and the negative electrode active substance layer includes a negative electrode active substance which may be carbon, silicon, or the like. To allow a large current to pass through without any fusing, multiple positive tabs are provided and stacked together, and multiple negative tabs are provided and stacked together. The separator may be made of PP (polypropylene, polypropylene), PE (polyethylene, polyethylene), or the like. In addition, the electrode assembly may be a winding structure or a laminated structure. The embodiments of this application are not limited thereto.

When a battery cell experiences a short circuit, overcharging, or the like, internal temperature or pressure of the battery cell may exceed a threshold, causing a pressure relief mechanism of the battery cell to be actuated to release the internal pressure of the battery cell. During pressure release, a large amount of high-temperature and high-pressure emissions are usually sprayed out from the battery cell via the pressure relief mechanism. In an existing battery structure, a firefighting pipe for conveying and storing a firefighting medium is usually arranged on a periphery of the pressure relief mechanism, so that the firefighting medium can be discharged to the pressure relief mechanism through the firefighting pipe when the pressure relief mechanism releases pressure. The firefighting medium enters the battery cell via the pressure relief mechanism to cool the battery cell. However, the inventors have found that when the firefighting pipe is arranged on the periphery of the pressure relief mechanism, especially when a drainage opening on the firefighting pipe is opposite the pressure relief mechanism in a direction of the pressure relief mechanism releasing the pressure, large pressure is easily formed near the drainage opening, making it difficult for the firefighting medium to flow out from the firefighting pipe. The firefighting medium can smoothly flow out from the drainage opening and enter the battery cell only after the pressure relief mechanism releases a part of the emissions and the pressure at the drainage opening becomes small. This greatly reduces cooling efficiency of the firefighting medium on the battery cell.

Based on this, an embodiment of this application provides a battery, where the battery includes a firefighting pipe and a plurality of battery cells provided with a pressure relief mechanism, and the firefighting pipe is provided on a side surface of the battery cell that is provided with the pressure relief mechanism. In a direction of the pressure relief mechanism releasing the pressure (that is, a first direction), the firefighting pipe and the pressure relief mechanism are arranged in a staggered manner, and the firefighting pipe is provided with a drainage opening, so that the drainage opening is also staggered with the pressure relief mechanism in the first direction. In this way, when the pressure relief mechanism is actuated and releases the internal pressure, the high-temperature and high-pressure emissions can be prevented from being directly sprayed towards the firefighting pipe via the pressure relief mechanism and forming large air pressure outside the drainage opening of the firefighting pipe, so that the firefighting medium can smoothly flow out from the drainage opening and cool the battery cell. A battery having such structure can cool the battery cell in a timely manner when internal temperature or air pressure of any battery cell exceeds the threshold, thereby improving the cooling efficiency and reducing safety risk, so as to improve the safety performance of the battery.

The battery described in this embodiment of this application is suitable for providing electric energy for an electric apparatus.

The electric apparatus may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, an electric toy airplane, and the like. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application imposes no special limitation on the foregoing electric apparatus.

For ease of description, the following embodiments are described using the electric apparatus being a vehicle as an example.

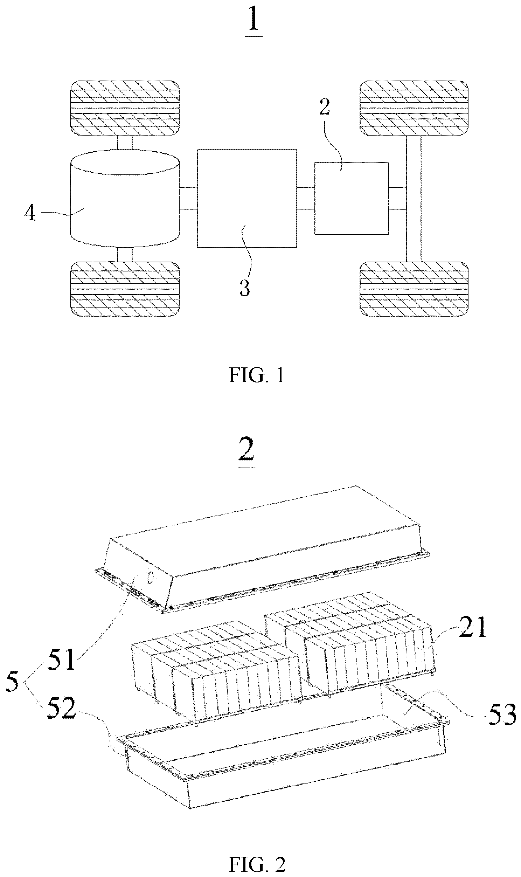

Referring to FIG. 1, FIG. 1 is a schematic structural diagram of a vehicle 1 according to some embodiments of this application. The vehicle 1 is provided with a battery 2 inside, and the battery 2 may be disposed at the bottom, front, or rear of the vehicle 1. The battery 2 may be configured to supply power to the vehicle 1. For example, the battery 2 may be used as an operational power supply for the vehicle 1.

The vehicle 1 may further include a controller 3 and a motor 4, and the controller 3 is configured to control the battery 2 to supply power for the motor 4, for example, to satisfy operating power needs of start, navigation, and driving of the vehicle 1.

In some embodiments of this application, the battery 2 can be used as not only the operational power supply for the vehicle 1 but also a driving power supply for the vehicle 1, replacing all or part of the fossil fuel or the natural gas to provide driving power for the vehicle 1.

Referring to FIG. 2, FIG. 2 is a schematic exploded view of the battery 2 according to some embodiments of this application. The battery 2 includes a box 5 and a battery cell 6, and the battery cell 6 is accommodated in the box 5.

The box 5 is configured to accommodate the battery cell 6, and the box 5 may be of a plurality of structures. In some embodiments, the box 5 may include a first box portion 51 and a second box portion 52. The first box portion 51 and the second box portion 52 fit with each other and jointly define an accommodating space 53 for accommodating the battery cell 6. The second box portion 52 may be a hollow structure having an opening at one end, the first box portion 51 is a plate structure, and the first box portion 51 covers an opening side of the second box portion 52 to form the box 5 having the accommodating space 53. Alternatively, both the first box portion 51 and the second box portion 52 may be a hollow structure having an opening at one side, and the opening side of the first box portion 51 fits with the opening side of the second box portion 52 to form the box body 5 having the accommodating space 53. Certainly, the first box portion 51 and the second box portion 52 may be of various shapes, such as a cylinder or a cuboid.

To improve sealing performance of the first box portion 51 and the second box portion 52 that are connected, a sealing member, for example, a sealant or a sealing ring, may also be provided between the first box portion 51 and the second box portion 52.

Assuming that the first box portion 51 fits on the top of the second box portion 52, the first box portion 51 may also be referred to as an upper box cover, and the second box portion 52 may also be referred to as a lower box.

In the battery 2, there are a plurality of battery cells 6. The plurality of battery cells 6 may be connected in series, parallel, or series-parallel, where being connected in series-parallel means a combination of series and parallel connections of the plurality of battery cells 6. The plurality of battery cells 6 may be directly connected in series, parallel or series-parallel, and then an entirety of the plurality of battery cells 6 is accommodated in the box 5; or certainly, the plurality of battery cells 6 may be connected in series, parallel or series-parallel first to form a battery module (not shown in the figure), and then a plurality of battery modules are connected in series, parallel or series-parallel to form an entirety which is accommodated in the box 5.

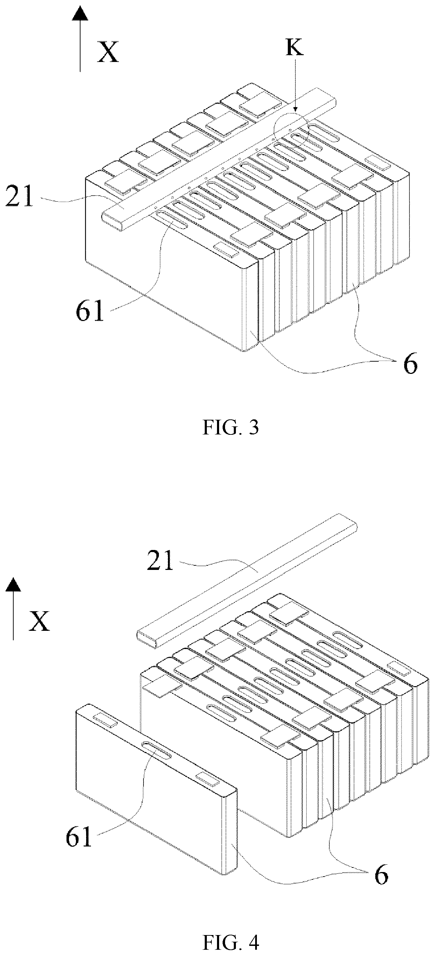

Referring to FIG. 3 to FIG. 6, an embodiment of this application provides the battery 2. The battery 2 includes a plurality of battery cells 6 and a firefighting pipe 21, where the plurality of battery cells 6 are each provided with a pressure relief mechanism 61, and the pressure relief mechanism 61 is configured to be actuated and releases internal pressure in a first direction X when the internal pressure or temperature of the battery cell 6 reaches a threshold; and the firefighting pipe 21 is configured to accommodate a firefighting medium (not shown in the figure); the firefighting pipe 21 is located on a side of the plurality of battery cells 6 that is provided with the pressure relief mechanism 61 in the first direction X, and is staggered with the pressure relief mechanism 61; and the firefighting pipe 21 is provided with a drainage opening 211, where the drainage opening 211 is configured to discharge the firefighting medium toward the pressure relief mechanism 61 when the pressure relief mechanism 61 is actuated, so as to cool the battery cell 6.

Referring to FIG. 3 and FIG. 4, FIG. 3 is a schematic diagram of assembling the firefighting pipe 21 and the battery cell 6 according to some embodiments of this application, and FIG. 4 is a schematic exploded view of FIG. 3.

Referring to FIG. 3 and FIG. 4, the plurality of battery cells 6 are all provided with the pressure relief mechanism 61, where the pressure relief mechanism 61 is configured to be actuated when the internal pressure or temperature of the battery cell 6 reaches the threshold, and releases the internal pressure of the battery cell 6. The pressure relief mechanism 61 may be integrally formed with the battery cell 6, or may be welded to the battery cell 6. When the battery cell 6 is in a normal use state, the pressure relief mechanism 61 always seals the battery cell 6, and internal substances of the battery cell 6 cannot leak into an external environment. When the battery cell 6 is in an abnormal use state due to an internal short circuit, overcharging, or the like, a large amount of gas and heat is usually generated inside the battery cell 6 due to violent chemical reactions. With the sharp increase of gas and generation of a large amount of heat inside the battery cell 6, the air pressure inside the battery cell 6 also gradually increases, the internal temperature gradually increases, and the battery cell 6 swells accordingly. When internal air pressure or temperature of the battery cell 6 exceeds a preset threshold, the pressure relief mechanism 61 is actuated to spray the internal high-temperature and high-pressure emissions out of the battery cell 6, so as to prevent the battery cell 6 from getting fire or explosion due to excessively high internal air pressure or temperature.

"Actuate" mentioned in this application means that the pressure relief mechanism 61 implements an action or is activated to a given state, so that the internal pressure of the battery cell 6 can be released. The action that the pressure relief mechanism 61 is put into may include but is not limited to cracking, breaking, tearing, or opening at least part of the pressure relief mechanism 61. The emissions from the battery cell 6 mentioned in this application include but are not limited to: electrolyte, fragments of positive and negative electrode plates and separator because of dissolution or breaking, and high-temperature and high-pressure gases produced by reactions.

The pressure relief mechanism 61 may be disposed on any surface of the battery cell 6. When the pressure relief mechanism 61 is actuated and releases high-temperature and high-pressure emissions, a discharge direction (that is, the first direction X) of the pressure relief mechanism 61 is generally perpendicular to the surface of the battery cell 6 provided with the pressure relief mechanism 61.

As shown in FIG. 3, to ensure smooth pressure release of the pressure relief mechanism 61, the pressure relief mechanism 61 may be disposed on a side surface of the plurality of battery cells 6 in their arrangement direction. In this way, the pressure relief mechanism 61 on any one of the plurality of battery cells 6 is not blocked during arrangement.

The firefighting pipe 21 is configured to accommodate the firefighting medium, so that the firefighting pipe 21 can be used for conveying the firefighting medium to the pressure relief mechanism 61 when the pressure relief mechanism 61 is actuated. The firefighting pipe 21 is arranged along the first direction X on the side of the plurality of battery cells 6 provided with the pressure relief mechanism 61, and the firefighting pipe 21 may be spaced apart from the surface of the battery cell 6 provided with the pressure relief mechanism 61. Alternatively, as shown in FIG. 3, the firefighting pipe 21 may abut against the surface of the battery cell 6 provided with the pressure relief mechanism 61. For another example, the firefighting pipe 21 may alternatively be fastened by gluing to the surface of the plurality of battery cells 6 provided with the pressure relief mechanism 61.

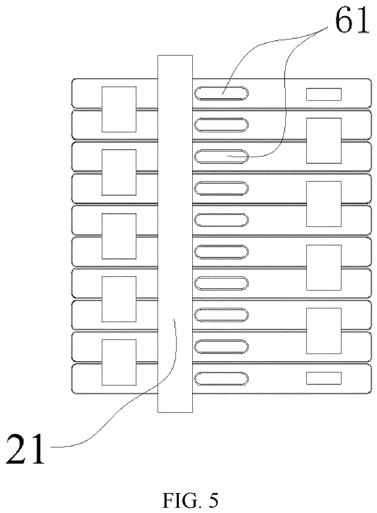

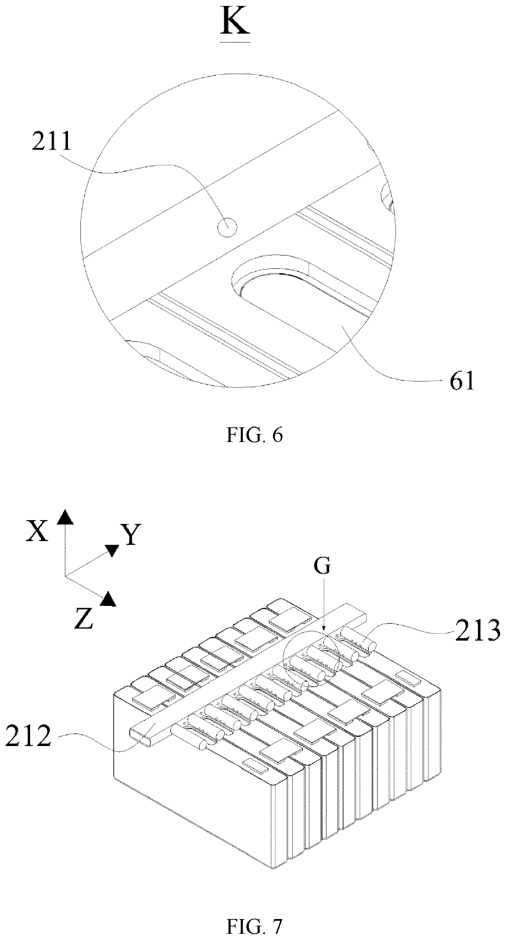

Referring to FIG. 5 and FIG. 6, FIG. 5 is a top view of FIG. 3, and FIG. 6 is a locally enlarged view of a position K in FIG. 3.

As shown in FIG. 5 and FIG. 6, the firefighting pipe 21 and the pressure relief mechanism 61 are arranged in a staggered manner in the first direction X, and the firefighting pipe 21 is provided with a drainage opening 211. The drainage opening 211 may be a through hole running through any side wall of the firefighting pipe 21, or may be a notch. The drainage opening 211 is configured to implement communication between the interior of the firefighting pipe 21 and the exterior of the firefighting pipe 21, so that the firefighting medium can be discharged from the drainage opening 211 to outside the firefighting pipe 21. The drainage opening 211 may be a through hole of any cross-section shape, which is not limited in this application. The cross-section size and quantity of the drainage openings 211 may be determined according to the required discharge rate and total emission amount of the firefighting medium, which is also not limited in this application.

When the pressure relief mechanism 61 is actuated, the pressure relief mechanism 61 may discharge high-temperature and high-pressure emissions toward a direction in which the pressure relief mechanism 61 is provided on the battery cell 6, and more specifically, may be discharged toward a direction of a zone at which the pressure relief mechanism 61 is actuated. Power and destructive impact of the emissions may be quite large, and even may be large enough to break through one or more structures in this direction. If the firefighting pipe 21 and the pressure relief mechanism 61 are arranged opposite each other, the emissions easily damage the firefighting pipe 21, such that the firefighting pipe 21 is broken, cannot remain intact, and loses its original function of conveying the firefighting medium, affecting its function of cooling the battery cell 6. In addition, the drainage opening 211 is usually disposed at a position on the firefighting pipe 21 that is opposite the pressure relief mechanism 61, so as to convey the firefighting medium into the pressure relief mechanism 61 through the drainage opening 211. When the pressure relief mechanism 61 is actuated and releases the high-temperature and high-pressure emissions, a higher pressure is easily formed near the drainage opening 211, making it difficult for the firefighting medium in the firefighting pipe 21 to flow out from the drainage opening 211. Based on this, the firefighting pipe 21 and the pressure relief mechanism 61 are arranged in a staggered manner, so that the drainage opening 211 is also staggered with the pressure relief mechanism 61. In this way, when the pressure relief mechanism 61 is actuated and releases the high-temperature and high-pressure emissions, the firefighting pipe 21 can be prevented from being damaged by the high-temperature and high-pressure emissions, and the external pressure of the drainage opening 211 is also small, so that the firefighting medium can flow out from the drainage opening 211 more easily and cool the battery cell 6 more quickly, thereby improving the overall use safety of the battery 2.

The embodiment of this application provides a battery 2. The battery 2 includes a plurality of battery cells 6 provided with a pressure relief mechanism 61. The battery 2 further includes a firefighting pipe 21 provided with a drainage opening 211, where the firefighting pipe 21 and the pressure relief mechanism 61 are arranged in a staggered manner in the first direction X, so that the drainage opening 211 is also staggered with the pressure relief mechanism 61, allowing the firefighting medium to be discharged from the drainage opening 211 without being affected by the emissions discharged when the pressure relief mechanism 61 is actuated. When the internal pressure or temperature of the battery cell 6 exceeds the threshold, the firefighting medium can be quickly discharged from the firefighting pipe, so as to cool the battery cell 6, thereby improving the overall use safety of the battery 2.

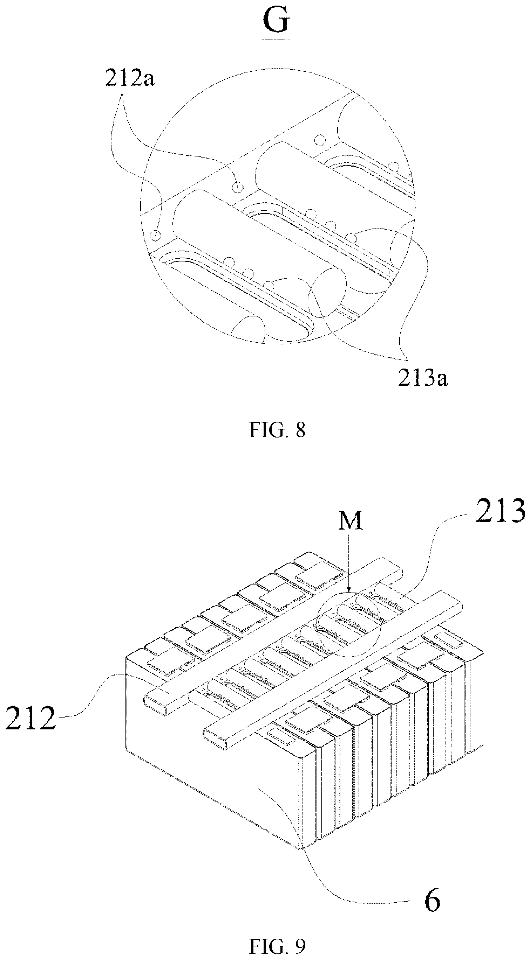

Referring to FIG. 7 and FIG. 8, FIG. 7 is a schematic diagram of assembling the firefighting pipe 21 and the battery cell 6 according to still some other embodiments of this application, and FIG. 8 is a partial enlarged view of position G in FIG. 7.

In some embodiments of this application, the firefighting pipe 21 includes a first pipe 212 extending in a second direction Y, where the plurality of battery cells 6 are arranged side by side in the second direction Y, the second direction Y being perpendicular to the first direction X, and a surface of the first pipe facing the pressure relief mechanism 61 is provided with a first drainage opening 212a. The first pipe 212 may be a straight pipe extending in the second direction Y, and the straight pipe may be arranged on one side of the pressure relief mechanism 61. In this way, the material for manufacturing the firefighting pipe 21 can be saved as much as possible, and time for the firefighting medium to reach any one of the battery cells 6 can also be shortened, improving the efficiency of the firefighting pipe 21 in transporting the firefighting medium. The firefighting pipe 21 may alternatively be a bent pipe, and the bent pipe may be arranged on the periphery of the pressure relief mechanism 61 in a manner of partially surrounding the pressure relief mechanism 61. In this way, a surface area of the firefighting pipe 21 facing the pressure relief mechanism 61 can be larger, so that the firefighting pipe 21 can have more positions for arranging the drainage opening 211. The first pipe 212 extends in the second direction Y to convey the firefighting medium through the first pipe 212 to the pressure relief mechanism 61 of the plurality of battery cells 6 arranged in the second direction Y.

Referring to FIG. 7 and FIG. 8, in some embodiments of this application, the firefighting pipe 21 further includes a second pipe 213 extending in a third direction Z, where a surface of the second pipe 213 facing the pressure relief mechanism 61 is provided with a second drainage opening 213a, the third direction Z being perpendicular to the first direction X and the second direction Y

The second pipe 223 may be a straight pipe extending in the third direction Z, or may be a bent pipe, and length of the second pipe 213 extending in the third direction Z may match a distance between the first pipe 212 and the pressure relief mechanism 61 in the third direction Z, or may exceed this distance by a particular length. In this way, an area of the surface of the firefighting pipe 21 facing the pressure relief mechanism 61 can be larger, so that more drainage openings 211 can be arranged on the firefighting pipe 21.

The first pipe 212 and the second pipe 213 may be circular tubes, flat tubes, or the like, which are not limited in this application. Materials of the first pipe 212 and the second pipe 213 may be the same. For example, the first pipe 212 and the second pipe 213 may be made from a material having good heat resistance, such as a metal material or a thermosetting polymer material (such as phenolic resin or amino resin). When the first pipe 212 and the second pipe 213 are made from the same material, the first pipe 212 and the second pipe 213 may be integrally formed. For example, the first pipe 212 and the second pipe 213 may be integrally formed through injection molding. The first pipe 212 and the second pipe 213 may alternatively be separately formed. After the first pipe 212 and the second pipe 213 are separately formed, the first pipe 212 and the second pipe 213 may be connected together through gluing, adapter connection, or the like, so as to form the firefighting pipe 21.

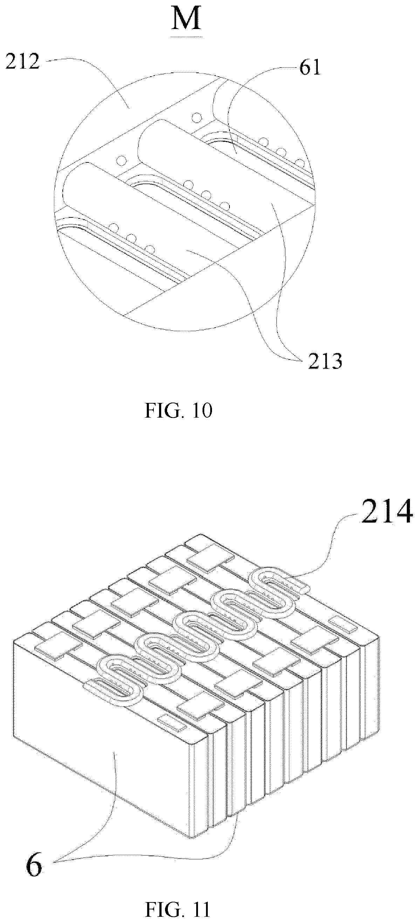

Referring to FIG. 9 and FIG. 10, FIG. 9 is a schematic diagram of assembling the firefighting pipe 21 and the battery cell 6 according to yet some other embodiments of this application, and FIG. 10 is a partial enlarged view of position M in FIG. 9.

The firefighting pipe 21 includes two first pipes 212 and at least two second pipes 213, where two adjacent second pipes 213 among the at least two second pipes 213 respectively intersect the first pipes 213 and form an enclosed zone, and at least one pressure relief mechanism 61 is provided in the enclosed zone.

When the pressure relief mechanism 61 initially releases the internal pressure, the pressure relief mechanism 61 is probably actuated due to partial zone breakage or tearing, and the partial zone may be located on any side of the pressure relief mechanism 61 in the third direction Z or the second direction Y, so that at least one pressure relief mechanism 61 is provided in the enclosed zone. Optionally, only one pressure relief mechanism 61 may be provided in each enclosed zone, so that the firefighting pipes 21 can be provided around each pressure relief mechanism 61 and used for arranging the drainage opening 211, and the firefighting medium can be discharged from the drainage openings 211 around the pressure relief mechanism 61 toward the pressure relief mechanism, thereby increasing a probability that the firefighting medium enters the pressure relief mechanism 61 as early as possible. As a broken or torn zone on the pressure relief mechanism 61 expands, the firefighting medium discharged from all sides toward the pressure relief mechanism 61 can also improve the efficiency of cooling the battery cell 6.

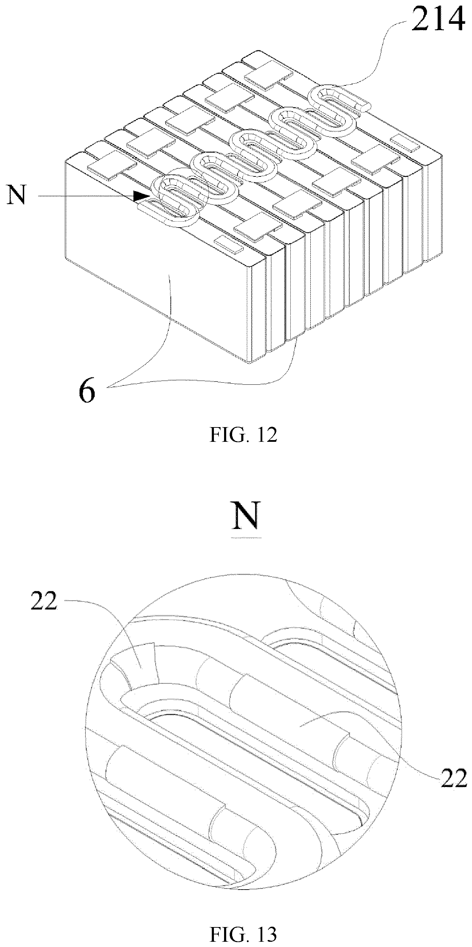

Referring to FIG. 11 and FIG. 12, FIG. 11 is a schematic diagram of assembling the firefighting pipe 21 and the battery cell 6 according to yet some other embodiments of this application, and FIG. 12 is a schematic diagram of assembling the firefighting pipe 21 and the battery cell 6 according to some other embodiments of this application.

The firefighting pipe 21 includes a third pipe 213, where the third pipe 213 is bent and extends in the second direction Y, and the plurality of battery cells 6 are arranged side by side in the second direction Y, the second direction Y being perpendicular to the first direction X; and the third pipe 213 includes a plurality of bending portions 214a having an opening facing the third direction Z, and at least one pressure relief mechanism 61 is provided in the bending portion 214a, the third direction Z being perpendicular to the first direction X and the second direction Y

When the battery cell 6 swells due to internal gas production during use, and width of the battery cell 6 in the second direction Y changes, this easily leads relative position changes of the drainage opening 211 of the firefighting pipe 21 and the pressure relief mechanism 61, affecting the cooling effect. Optionally, the plurality of bending portions 214a having an opening facing the third direction Z may be provided on the firefighting pipe 21, so that when the width of the battery cell 6 changes, the opening angle of the opening of the bending portion 214a can increase accordingly to adapt to the width change of the battery cell 6. Optionally, the firefighting pipe 21 may be fastened to the plurality of battery cells 6 through gluing, bolt joint, or the like, so that when the opening angle of the bending portion 214a changes to adjust the length of the firefighting pipe 21, the drainage opening 211 can remain opposite the pressure relief mechanism 61.

Optionally, the firefighting pipe 21 may be made from a flexible material such as PE (polyethene, polyethylene), PP (polypropylene, polypropylene), or a low-temperature alloy. In this way, the opening angle of the firefighting pipe 21 can easily change so that the firefighting pipe 21 can adapt to the width change of the battery cell 6.

According to some embodiments of this application, openings of the plurality of bending portions 214a may be disposed facing a same side, or the openings of two adjacent bending portions 214a among the plurality of bending portions 214a may be disposed facing opposite sides.

The openings of the plurality of bending portions 214a are disposed facing the same side, so that a joint of two adjacent bending portions 214a can form an abrupt change position in an extension direction of the firefighting pipe 21. When the firefighting medium flows in the firefighting pipe 21 and flows across this abrupt change position, turbulent flow is easily generated, which makes the firefighting medium flow faster and increases the pressure inside the firefighting pipe 21, so that the firefighting medium can more easily flow out from the drainage opening 211 near the abrupt change position, improving the cooling effect of the firefighting pipe 21 on the battery cell 6.

As shown in FIG. 11 and FIG. 12, the openings of the two adjacent bending portions 214a in the plurality of bending portions 214a are disposed facing opposite sides. This helps ensure a consistent pipe diameter during forming of the firefighting pipe 21, and two adjacent bending portions 214a are gradually formed in a slow change manner in the extension direction. When size of the firefighting pipe 21 changes due to battery cell 6 swelling, the plurality of bending portions 214a are evenly stressed and easily deforms.

Referring to FIG. 13, FIG. 13 is a partial enlarged view of position N in FIG. 12.

According to some embodiments of this application, the battery 2 further includes a sealing member 22 for sealing the drainage opening 211, and the sealing member 22 is configured to be damaged when the pressure relief mechanism 61 is actuated, so as to allow the firefighting medium to flow out from the drainage opening 211.

As shown in FIG. 13, the sealing member 22 may be a separate component and seal the drainage opening 211 from the exterior. When the pressure relief mechanism 61 is actuated, the sealing member 22 falls off the drainage opening 211, or is broken, so that the firefighting medium stored in the firefighting pipe 21 flows out from the drainage opening 211 and cools the battery cell 6. The material and arrangement manner of the sealing member 22 are not limited, provided that the sealing member 22 can lose its sealing effect on the drainage opening 211 when the pressure relief mechanism 61 is actuated. For example, the sealing member 22 may be made from a thermosensitive material. When the pressure relief mechanism 61 is actuated and releases internal pressure, the heat released can melt the sealing member 22 and cause the sealing member 22 to fall off the drainage opening 211 or to be broken, so that the firefighting medium flows out from the firefighting pipe 21. For another example, the sealing member 22 may partially cover the pressure relief mechanism 61 in the first direction X. When the pressure relief mechanism 61 is actuated and releases internal pressure, the emissions of the pressure relief mechanism 61 can form an impact on the sealing member 22, the sealing member 22 falls off the drainage opening 211 under the impact, and the firefighting medium flows out.

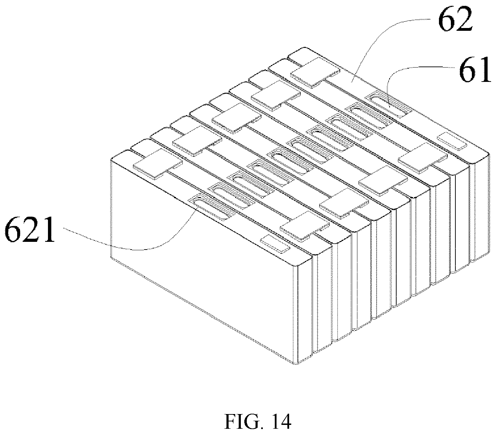

Referring to FIG. 14, FIG. 14 is a schematic structural diagram of arrangement of a plurality of battery cells 6 according to some embodiments of this application.

As shown in FIG. 14, the battery cell 6 further includes a side wall 62, where an outer surface of the side wall 62 is provided with a groove 621, and the pressure relief mechanism 61 is located in the groove 621. In this way, when the firefighting medium flows into the groove 621 from the drainage opening 211, the firefighting medium can flow into the pressure relief mechanism 61 under the action of its own gravity, and cool the battery cell 6. The size of the groove 621 can be adjusted according to distance between the drainage opening 211 and the pressure relief mechanism 61, orientation of the drainage opening 211, flow rate of the firefighting medium, and the like, so that more firefighting medium flowing out from the drainage opening 211 can flow into the groove 621 and finally enters the pressure relief mechanism 61.

Although this application has been described with reference to the preferred embodiments, various modifications to this application and replacements with equivalents of the components herein can be made without departing from the scope of this application. In particular, as long as there is no structural conflict, the various technical features mentioned in the embodiments can be combined in any manners. This application is not limited to the specific embodiments provided in this specification, but includes all technical solutions falling within the scope of the claims.

## Claims

1. A battery, **characterized by** comprising:
a plurality of battery cells, wherein the plurality of battery cells are each provided with a pressure relief mechanism, and the pressure relief mechanism is configured to be actuated and release internal pressure in a first direction when the internal pressure or temperature of the battery cell reaches a threshold; and
a firefighting pipe, configured to accommodate a firefighting medium, wherein the firefighting pipe is arranged along the first direction on a side of the plurality of battery cells that is provided with the pressure relief mechanism, and is disposed in a staggered manner with the pressure relief mechanism; the firefighting pipe is provided with a drainage opening; and the drainage opening is configured to discharge the firefighting medium toward the pressure relief mechanism when the pressure relief mechanism is actuated, so as to cool the battery cell.

2. The battery according to claim 1, **characterized in that** the firefighting pipe comprises a first pipe extending in a second direction, wherein the plurality of battery cells are arranged side by side in the second direction, the second direction being perpendicular to the first direction, and a surface of the first pipe facing the pressure relief mechanism is provided with a first drainage opening.

3. The battery according to claim 2, **characterized in that** the firefighting pipe further comprises a second pipe extending in a third direction, wherein the second pipe and the first pipe are in communication with each other, and a surface of the second pipe facing the pressure relief mechanism is provided with a second drainage opening, the third direction being perpendicular to the first direction and the second direction.

4. The battery according to claim 3, **characterized in that** the firefighting pipe comprises two such first pipes and at least two such second pipes, wherein two adjacent second pipes among the at least two second pipes respectively intersect the two first pipes to form an enclosed zone, and at least one pressure relief mechanism is provided in the enclosed zone.

5. The battery according to claim 3, **characterized in that** the firefighting pipe comprises a third pipe, wherein the third pipe is bent and extends in the second direction, and the plurality of battery cells are arranged side by side in the second direction, the second direction being perpendicular to the first direction; and
the third pipe comprises a plurality of bending portions having an opening facing the third direction, and the bending portion is provided with at least one such pressure relief mechanism, the third direction being perpendicular to the first direction and the second direction.

6. The battery according to claim 5, **characterized in that** the openings of the plurality of bending portions all face a same side.

7. The battery according to claim 5, **characterized in that** the openings of two adjacent bending portions among the plurality of bending portions face opposite sides.

8. The battery according to any one of claims 1 to 7, **characterized in that** the battery further comprises a sealing member for sealing the drainage opening, and the sealing member is configured to be damaged when the pressure relief mechanism is actuated, so that the firefighting medium flows out from the drainage opening.

9. The battery according to claim 8, **characterized in that** the sealing member is made from a thermosensitive material.

10. The battery according to any one of claims 1 to 9, **characterized in that** the battery cell further comprises a side wall, wherein an outer surface of the side wall is provided with a groove, and the pressure relief mechanism is located in the groove.

11. An electric apparatus, **characterized by** comprising the battery according to any one of claims 1 to 10, wherein the battery is configured to provide electric energy.
